# EUROPEAN PATENT APPLICATION

(11) **EP 2 770 662 A1**
(43) Date of publication of application: **27.08.2014**
(21) Application number: 12842606.1
(22) Date of filing: 19.10.2012
(51) Int. Cl.: H04L 9/32, H04L 12/24

(54) **CENTRALIZED SECURITY MANAGEMENT METHOD AND SYSTEM FOR THIRD PARTY APPLICATION AND CORRESPONDING COMMUNICATION SYSTEM**

(30) Priority: 20.10.2011 CN 201110319068
(71) Applicant: ALCATEL LUCENT, 92100 Boulogne-Billancourt (FR)
(72) Inventor: HU, Zhiyuan, Shanghai 201206 (CN); LUO, Zhigang, Shanghai 201206 (CN); WAN, Yonggen, Shanghai 201206 (CN)
(74) Representative: Hirsch & Associés
(86) International application number: PCT/CN2012/083219
(87) International publication number: WO 2013/056674

(57) **Abstract**

Embodiments include a method and a system for performing a centralized secure management on a third-party application. The method comprises: sending, by the third-party application, its identity, authentication credential and access grant to the centralized secure management system in a distinguishable manner; forwarding, by the centralized secure management system, the identity and access grant to the Authorization Server after successfully authenticating the third-party application; and issuing, by the Authorization Server, access token for accessing protected resources to the third-party application through the centralized secure management system if the access grant is valid.

## Description

### Technical Field

The present invention relates to communications, in particular, to technologies for performing a centralized secure management on a third-party application/client to access users' protected resources.

### Description of the Related Art

At present, integration of Internet services has become a necessary trend. In order to provide users with better services, many service providers allow third-party applications/clients to provide the users with more applications by evoking "Open Network APIs (Application Programming Interfaces)". The essential problem of open platform is that the user authentication, authorization and the third-party applications/clients must use open network APIs safely. For a user, he generally does not hope that a third-party can directly use his own user name and password to access the user's protected network resources, unless the two parties are in a strong trust relationship. The OAuth (Open Authorization) protocol is set forth for the purpose of solving the essential problem of "authentication and authorization" during integration of services.

The OAuth protocol developed by IETE (i.e., Internet Engineering Task Force) is the current internationally general authorization manner, which provides a third-party application/client with a method of accessing the protected resources by representing the resources' owner. Before accessing the protected resources, the third-party application/client must first obtain authorization from the resources' owner, i.e. access grant (the access grant represents an authorization provided by the resources' owner, whose type depends on the obtaining manner used by the third-party application/client and the manner supported by the Authorization Server), and then exchange access token (representing the action scope, duration and other attributes of the access grant) with the access grant. The third-party application/client accesses the protected resources by showing access token to the Resource Server.

The new version OAuth2.0 of the OAuth protocol takes simplifying the implementation as a principle, and support more access forms; for instance, it supports "Web application, desktop application, mobile terminal, home device" etc. at the same time. OAuth2.0 allows a user to grant a third-party application/client access to the user's protected resources, without necessarily revealing their long-term credentials, or even their identity. In this way, the privacy of user sensitive information can be protected.

For this purpose, the service providers have to manage users' resources and to build Authorization Server defined in IETF OAuth2.0 responsible for:
- management of users;
- management of the third-party application/client;
- issuing access grant (see definition in IETF OAuth2.0) with which the third-party application/client applies for access token;
- mutual authentication between Authorization Server and the user;
- mutual authentication between Authorization Server and the third-party application/client;
- validation of access grant; and
- issuing access token with which the third-party application/client can access users' protected resources.

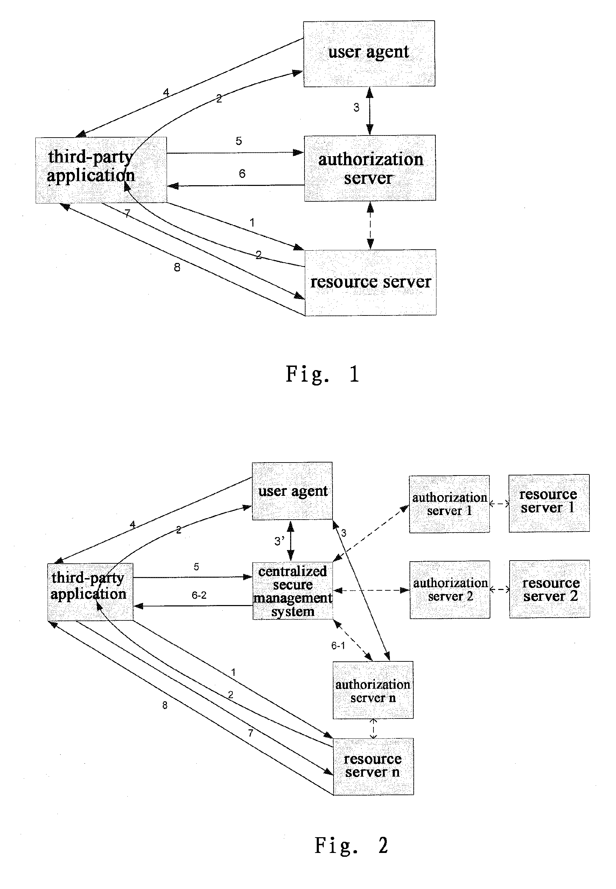

Fig. 1 schematically shows a system and workflow according to IETF OAuth2.0.

The workflow as shown in Fig. 1 is as follow:
1. The third-party application/client plans to access a user's protected resources stored in the Resource Server;
2. The Resource Server finds that the third-party application/client has no valid access token then redirects the third-party application/client to a user agent to get the user's authorization;
3. Before the user authorizes the third-party application/client with grant access, the user must be authorized by the Authorization Server, and the user may need to authenticate the Authorization Server at the same time;
4. The Authorization Sever sends grant access via the user agent to the third-party application/client;
5. The third-party application/client submits identity, the grant access and its own authentication credential to the Authorization Server in order to apply for access token;
6. After mutual authentication between the Authorization Server and the third-party application/client and after validating the grant access, the Authorization Server issues access token to the third-party application/client;
7. The third-party application/client submits access token to the Resource Server to access the user's resources;
8. If access token is valid, the Resource Server responds data to the third-party application/client.

However, IETF OAuth2.0 is very good only for some big service providers since they can afford the management of the third-party application/client by themselves (such as identity, authentication, authentication credentials management, etc). However, it is not easy for the small and medium service providers to do this since it will cost them too much to manage the third-party application/client. Moreover, big service providers have to develop and deploy overlapped components to manage third-party web site and application/client if they have deployed separate resources servers internally.

Furthermore, as there are so many third-party applications/clients, some of which may be developed and provided by individuals, it is possible that the attackers develop malicious network APIs to access users' resources illegally by misusing network APIs. So, it is not easy to guarantee that all third-party applications/clients are secure and trusted before allowing them access to users' protected resources.

### Summary of the Invention

To address the above defects in prior art, according to a first aspect of the present invention, the present invention sets forth a method for performing a centralized secure management on a third-party application to access users' protected resources stored in a Resource Server. According to the method, a centralized secure management system of the third-party application for centralized management is responsible for validating security of the third-party application and digitally signing the third-party application before issuing the third-party application, and issues an authentication credential with which the centralized secure management system can authenticate the third-party application. The method comprises: sending, by the third-party application, its identity, authentication credential and access grant to the centralized secure management system in a distinguishable manner; forwarding, by the centralized secure management system, access grant to the Authorization Server after successfully authenticating the third-party application; and issuing, by the Authorization Server, access token for accessing the users' protected resources to the third-party application through the centralized secure management system if the Authorization Server authenticates the access grant as valid successfully.

According to another aspect of the present invention, there is provided a system for performing a centralized secure management on a third-party application to access users' protected resources stored in a Resource Server, the system comprising: a first receiving device for receiving the identity, the authentication credential and access grant of the third-party application sent by the third-party application in a distinguishable manner; a first authenticating device for authenticating the third-party application using the identity and the authentication credential after receiving the identity, the authentication credential and access grant; a first forwarding device for forwarding access grant of the third-party application to the Authorization Server after successfully authenticating the third-party application; and a second forwarding device for forwarding access token issued by the Authorization Server to the third-party application.

Preferably, the system according to the present invention further comprises: a second receiving device for receiving a third-party application which is developed by an individual developer or a service provider and uses private keys of the individual developer or service provider for digital signature; a second authenticating device for authenticating the digital signature of the third-party application received by the second receiving device using a digital certificate developed by the individual developer or service provider; a safety check device for detecting whether the third-party application includes malicious codes or virus after successful authentication of the second authenticating device; a digital signature device for digitally signing the third-party application using the private keys of the system after successfully safety-checking the third-party application; a third-party application registry and management device for managements of uniform distribution of identity, authentication credential and relevant attributes for the third-party application; and a certificate management device for uniform managements, such as generating, issuing and withdrawing, of all the relevant digital certificates.

According to yet another aspect of the present invention, there is provided a communication system, comprising: at least one Authorization Server, at least one Resource Server; a user agent, a third-party application, and a system for performing a centralized secure management on a third-party application to access users' protected resources stored in a Resource Server according to the present invention.

### Brief Description of the Drawings

Other features, objects and advantages of the present invention will become more apparent by reading the following detailed description of non-limiting embodiments with reference to accompany drawings, in which:
Fig. 1 schematically shows a system and workflow according to IETF OAuth2.0 in the prior art;
Fig. 2 schematically shows a system and workflow for performing a centralized secure management on a third-party application according to the present invention;
Fig. 3 is a flowchart of a method of a centralized secure management on a third-party application according to an embodiment of the present invention; and
Fig. 4 is a block diagram of a system for performing a centralized secure management on a third-party application according to an embodiment of the present invention.

### Detailed Description of the Preferred Embodiment

The basic idea of the present invention is to perform a centralized secure management on a third-party application/client to access users' protected resources stored in a Resource Server. For the sake of simplicity, the "third-party application/client" in the following text will be designated as "third-party application". Fig. 2 schematically shows a system and workflow for performing a centralized secure management on a third-party application. As shown in Fig. 2, comparing to existing solution in Fig. 1, there is a centralized secure management system is added. The system has following functions:
- Before releasing the third-party application officially,
   ◆ using a digital certificate of an individual developer or a service provider to authenticate the third-party application for signature through keys of the individual developer or service provider to ensure the traceability of the third-party application;
   ◆ validating whether the third-party application is secure (e.g., checking anti-virus/anti-malware) or not;
   ◆ signing the third-party application with its keys so that the service provider or end user can verify the security, authenticity and reliability of the third-party application before installation of the third-party application;
   ◆ issuing credentials (e.g., certificate or key) to the third-party application used for authentication;
- Releasing the third-party application officially
- Before the third-party application accesses to users' protected resources, the system has the following functions:
   ◆ mutual authentication between the centralized secure management system and the third-party applications;
   ◆ management of identity and its authentication credential for the third-party application.

Comparing to existing solution in Fig. 1, the third-party application in Fig. 2 may need to separately pack the identity, the authentication credential and the access grant thereof or separately mark the identity, the authentication credential and the access grant so that the centralized secure management server according to the present application can distinguish them separately.

In Fig. 2, the Authorization Server_1/Resource Server_1, Authorization server_2/Resource Server_2 and Authorization server_n/Resource Server_n may belong to:
◆ different small and medium service providers, or
◆ the same big service providers that deployed some Resource Servers separately.

Comparing to existing solution in Fig. 1, Authorization Server_i should distinguish the message of step 5 is from third-party application directly or from the centralized secure management system as shown in step 5. The distinguishing may be implemented through a flag for example. If the message of step 5 is from third-party application directly, the Authorization Server_i should authenticate third-party application and validate the access grant; if the message of step 5 is from the centralized secure management system, the Authorization Server_i should only validate access grant.

Comparing to existing solution in Fig. 1, the changes of work flow in Fig. 5 exist as following:
- at step 5, the identity, the authentication credential and the access grant of third-party application may be sent to the centralized secure management system in a distinguishable manner, wherein the distinguishable manner means that the identity, the authentication credential and the access grant may either be separately packaged or separately marked so that the centralized secure management system can distinguish them.
- at step 6, it includes two sub-steps as following:
   ◆ 6-1: after authenticating the third-party application successfully, the centralized secure management system forwards the access grant to an Authorization Server_n. If the access grant is valid, the Authorization Server_n will send the access token issued to the third-party application to the centralized secure management system. In the present invention, the access grant and access token comply with the IETF-defined authentication protocol OAuth2.0, for instance.
   ◆ 6-2: the centralized secure management system forwards access token to third-party application.

Furthermore, according to the solution of the present invention, if the third-party application does not have a valid access token, the Resource Server redirects the access request of the third-party application to the user agent.

It shall be pointed out that the centralized secure management system according to the present invention comprises a server group which can comprise certificate issuing management server, a security checking server of the third-party application, a registry management server of the third-party application, an authentication server of the third-party application, a storage and release server of the third-party application, etc. for instance.

It shall further be pointed out that in the present invention it is assumed that the user allows the third-party application to access its protected resources. Before authorizing the third-party application to access its protected resources, the user must be authenticated by the Authorization Server to ensure that the identity of the user is authentic and has the authority to grant the third-party application to access its protected resources, so that the third-party application obtains access grant so as to obtain access token. According to the solution of the present invention, the user authentication may be implemented either by communication between the user agent and the Authorization Server directly or by redirection to the Authorization Server by the user agent through the centralized secure management system.

Similarly, the access grant may be either sent by the Authorization Server to the third-party application through the user agent or sent by the Authorization Server to the third-party application through the centralized secure management system and the user agent.

Furthermore, the centralized secure management system according to the present invention can implement the following functions:
- when a third-party application developed by an individual developer or a service provider signature and signing using the keys of the individual developer or service provider is received, using a digital certificate of an individual developer or a service provider to authenticate the digital signature of the third-party application to ensure the traceability of the third-party application;
- after the authentication is implemented successfully, detecting whether the third-party application includes malicious codes or virus;
- after a safety detection is implemented on the third-party application successfully, using the keys of the centralized secure management system to sign the third-party application digitally, so as to ensure the security, authenticity and reliability thereof when the third-party application is installed;

- performing managements of uniform distribution of identity, authentication credentials and relevant attribute for the third-party application;
- performing uniform managements on all the related digital certificates such as generating, issuing and withdrawing.

By using the centralized secure management system according to the present invention, it can save a large number of costs and reduce the burden for small and medium service providers (which means that it is only responsible for managements of the user and the protected resources), and it can further make big service providers provide a plurality of internal Resource Servers deployed thereby separately with a centralized management on the third-party application. Furthermore, by using the solution of the present invention, it can ensure that the third-party application is more secure and reliable, because the third-party application is safety-managed by a reliable third-party mechanism (i.e., the centralized secure management system of the present invention).

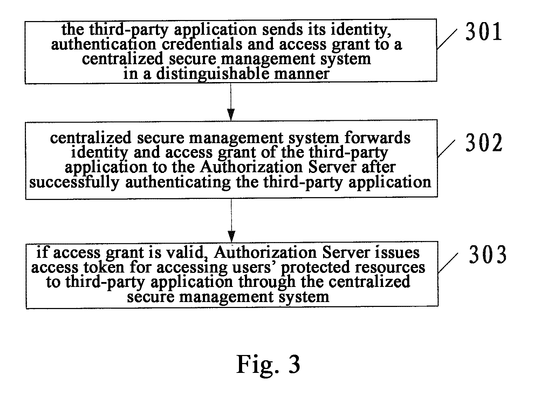

Below, a method for performing a centralized secure management on a third-party application according to an embodiment of the present invention is described by referring to Fig. 3. The method of the embodiment may be adapted to the system as shown in Fig. 2 above, and we will not go further on the description of the system above.

As shown in Fig. 3, first, at step 301, the third-party application sends its identity, authentication credential and access grant to the centralized secure management system in a distinguishable manner. The authentication credential here may be a digital certificate, a cipher or a password for example, and the access grant may comply with the IETF-defined authentication protocol OAuth2.0 for example. The distinguishable manner means that the identity, the authentication credential and the access grant may either be separately packaged or separately marked so that the centralized secure management system can distinguish them. As stated above, in the embodiment, it is assumed that the user allows the third-party application to access its protected resources. When the third-party application requests to access the users' protected resources in the Resource Server, if the third-party application does not have a valid access token, the Resource Server redirects the access request of the third-party application to a user agent.

It shall be pointed out, before authorizing the third-party application for accessing, the user must be authenticated by the Authorization Server, so that the third-party application obtains access grant so as to obtain access token by using the access grant, wherein the authentication of the user by the Authorization Server may be implemented either by the user agent authenticating to the Authorization Server directly or by redirection to the Authorization Server by the user agent through the centralized secure management system for authentication.

It shall further be pointed out, after the Authorization Server sends access grant to the third-party application, the third-party application sends identity, authentication credential and the access grant of the third-party application to the centralized secure management system, wherein the access grant may be either sent by the Authorization Server to the third-party application through the user agent or sent by the Authorization Server to the third-party application through the centralized secure management system and the user agent.

Then, at step 302, the centralized secure management system forwards the access grant to the Authorization Server after successfully authenticating the third-party application. Now, the access grant complies with the IETF-defined authentication protocol OAuth2.0, for instance.

Then, at step 303, if the access grant is valid, the Authorization Server issues the access token for accessing the users' protected resources to the third-party application through the centralized secure management system. Now, the access token complies with the IETF-defined authentication protocol OAuth2.0, for instance. Therefore, the third-party application may submit the access token to the Resource Server to access the users' protected resources.

In the embodiment, the interactive processes between the centralized secure management system, the user agent, the third-party application, the Authorization Server and the Resource Server can comply with the manner of any existing and future solution, standard and criterion, such as but not limited to the above-mentioned OAuth2.0.

In the description above, it can be learned that using the method of performing centralized secure management on the third-party application according to the embodiment by adding a new centralized secure management system in the existing system can save a large number of costs and reduce the burden for small and medium service providers (which means that it is only responsible for managements of the user and the protected resources), and it can further make big service providers provide a plurality of internal Resource Servers deployed thereby separately with a centralized management on the third-party application. Furthermore, by using the solution of the present invention, it can ensure that the third-party application is more secure and reliable, because the third-party application is safety-managed by a reliable third-party mechanism (i.e., the centralized secure management system of the present invention).

Under the same concept, according to another aspect of the present invention, there is provided a system for performing a centralized secure management on a third-party application to access users' protected resources stored in a Resource Server. Below, the system will be described by referring to a figure.

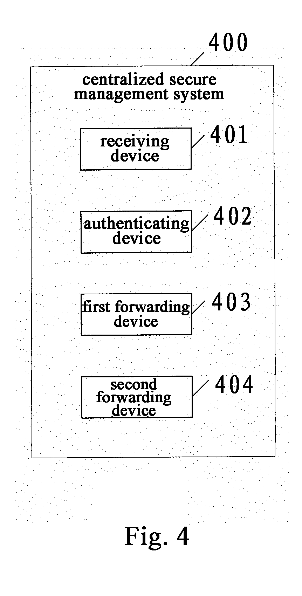

Fig. 4 shows a centralized secure management system 400 according to an embodiment of the present invention. The system 400 comprises a receiving device 401, an authenticating device 402, a first forwarding device 403 and a second forwarding device 404. Similarly, it is assumed that the user allows the third-party application to access its protected resources. Specifically, when the third-party application requests to access the protected resources, after the Authorization Server successfully authenticates the user and issues an access grant to the third-party application, the receiving device 401 receives the identity, the authentication credential and the access grant of the third-party application sent by the third-party application in a distinguishable manner. The distinguishable manner means that the identity, the authentication credential and the access grant may either be separately packaged or separately marked so that the centralized secure management system can distinguish them. After receiving the identity, the authentication credential and the access grant, the authenticating device 402 uses the identity, the authentication credential to authenticate the third-party application. The first forwarding device 403 forwards the access grant of the third-party application to the Authorization Server after successfully authenticating the third-party application, and the second forwarding device 404 forwards the access token issued by the Authorization Server to the third-party application. Therefore, the third-party application can access the user's protected resources by submitting the access token to the Resource Server.

As stated above, the centralized secure management system 400 further implement the following functions:
- when a third-party application developed by an individual developer or a service provider signature and signing using the keys of the individual developer or service provider is received, using a digital certificate of an individual developer or a service provider to authenticate the digital signature of the third-party application to ensure the traceability of the third-party application;
- after the authentication is implemented successfully, detecting whether the third-party application includes malicious codes or virus;
- after a safety detection is implemented on the third-party application successfully, using the keys of the centralized secure management system to sign the third-party application digitally, so as to ensure the security, authenticity and reliability thereof when the third-party application is installed;
- performing managements of uniform distribution of identity, authentication credential and relevant attribute for the third-party application;
- performing uniform managements on all the related digital certificates such as generating, issuing and withdrawing.

It shall be pointed out that the security check of centralized secure management system on the third-party application can comply with the manner of any existing and future solution, standard and criterion.

In the implementation, the centralized secure management system 400 and the receiving device 401, authenticating device 402, first forwarding device 403 and second forwarding device 404 it comprises may be implemented in the form of software, hardware and combination of software and hardware. For instance, persons skilled in the art know various kinds of devices for implementing the means well, such as a microprocessor, a microcontroller, an Application Specific Integrated Circuit (ASIC), a Programmable Logic Device (PLD) and/or a Field Programmable Gate Array (FPGA) etc. Respective components of the centralized secure management system according to the embodiment may be realized physically separately and connected to each other operatively.

In the operation, the system for performing a centralized secure management on a third-party application to access users' protected resources stored in a Resource Server of the embodiment described in combination with Fig. 4 above may implement the method for performing a centralized secure management on a third-party application mentioned above. By using the system, it can save a large number of costs and reduce the burden for small and medium service providers (which means that it is only responsible for managements of the user and the protected resources), and it can further make big service providers provide a plurality of internal Resource Servers deployed thereby separately with a centralized management on the third-party application. Furthermore, by using the solution of the present invention, it can ensure that the third-party application is more secure and reliable, because the third-party application is safety-managed by a reliable third-party mechanism (i.e., the centralized secure management system of the present invention).

Under the same inventive concept, according to yet another aspect of the present invention, there is provided a communication system, comprising at least one Authorization Server, at least one Resource Server, a user agent, a third-party application, and a system for performing a centralized secure management on a third-party application to access users' protected resources stored in a Resource Server according to the present invention. Furthermore, the communication system may comprise other network elements such as a router etc.

Though a method for performing a centralized secure management on a third-party application, a system for performing a centralized secure management on a third-party application to access users' protected resources stored in a Resource Server, and a communication system, comprising at least one Authorization Server, at least one Resource Server, a user agent, a third-party application, and a system for performing a centralized secure management on a third-party application to access users' protected resources stored in a Resource Server according to the present invention are described specifically by means of some illustrative embodiments, the embodiments should be considered as illustrative rather than restrictive, and those skilled in the art can implement various kinds of variations and modifications within the spirit and scope of the present invention. Therefore, the present invention is not limited to the embodiments, and the range of the present invention is defined only by the appended claims.

## Claims

1. A method for performing a centralized secure management on a third-party application to access users' protected resources stored in a Resource Server, **characterized in that** a centralized secure management system of the third-party application for centralized management is responsible for validating security of the third-party application and digitally signing the third-party application, and issues an authentication credential with which the centralized secure management system can authenticate the third-party application, the method comprising the steps of:
- sending, by the third-party application, its identity, authentication credential and access grant to the centralized secure management system in a distinguishable manner;
- forwarding, by the centralized secure management system, the identity and access grant to the Authorization Server after successfully authenticating the third-party application; and
- issuing, by the Authorization Server, access token for accessing the users' protected resources to the third-party application through the centralized secure management system if the access grant is valid.

2. The method according to claim 1, wherein,
- the access grant and the access token comply with the IETF-defined authentication protocol OAuth2.0; and/or- the authentication credential is one of a digital certificate, a key or a password.

3. The method according to claim 1 or 2, wherein,
- before the third-party application is authorized for accessing, the user must be authenticated by the Authorization Server, so that the third-party application obtains access grant so as to obtain access token by using the access grant; and/or
- after the Authorization Server sends access grant to the third-party application, the third-party application sends identity, authentication credential and the access grant of the third-party application to the centralized secure management system.

4. The method according to any one of claims 1 to 3, further comprising:
- when the third-party application requests to access the users' protected resources stored in the Resource Server, if the third-party application does not have a valid access token, the Resource Server redirects, the access request of the third-party application to a user agent; and/or
- after the Authorization Server issues access token to the third-party application through the centralized secure management system, the third-party application submittsthe access token to the Resource Server to access the users' protected resources.

5. The method according to claim 3, wherein,
- the Authorization Server authenticating the user is done by the user agent via directly authenticating to the Authorization Server; and
- the access grant is sent to the third-party application by the Authorization Server through the user agent.

6. The method according to claim 3, wherein,
- the Authorization Server authenticating the user is done by the user agent via redirecting to the Authorization Server through the centralized secure management system for authentication; and
- at least one of the following steps is performed: the access grant is sent to the third-party application by the Authorization Server through the centralized secure management system and the user agent, or the access grant is sent to the third-party application by the Authorization Server through the user agent.

7. The method according to any one of claims 1 to 3, wherein the distinguishable manner includes one of the following manners: the third-party application separately packages the identity, the authentication credential and the access grant, or the third-party application separately marks the identity, the authentication credential and the access grant.

8. A system for performing a centralized secure management on a third-party application to access users' protected resources stored in a Resource Server, **characterized in that** the system is responsible for validating security of the third-party application and digitally signing the third-party application, and issues an authentication credential with which the system can authenticate the third-party application, the system comprising:
- a first receiving device for receiving the identity, the authentication credential and the access grant of the third-party application sent by the third-party application in a distinguishable manner;
- a first authenticating device for authenticating the third-party application using the identity, the authentication credential after receiving the identity, the authentication credential and the access grant;
- a first forwarding device for forwarding the identity and the access grant of the third-party application to the Authorization Server after successfully authenticating the third-party application; and
- a second forwarding device for forwarding access token issued by the Authorization Server to the third-party application.

9. The system according to claim 8, further comprising:
- a second receiving device for receiving a third-party application which is developed by an individual developer or a service provider and uses private keys of the individual developer or service provider for digital signature;
- a second authenticating device for authenticating the digital signature of the third-party application received by the second receiving device using a digital certificate developed by the individual developer or service provider;
- a safety check device for detecting whether the third-party application includes malicious codes or virus after successful authentication of the second authenticating device;
- a digital signature device for digitally signing the third-party application using the private keys of the system after successfully safety-checking the third-party application;
- a third-party application registry and management device for managements of uniform distribution of identity, authentication credential and relevant attributes for the third-party application; and
- a certificate management device for uniform management of all the relevant digital certificates.

10. The system according to claim 8 or 9, wherein:
- the access grant and access token comply with the IETF-defined authentication protocol OAuth2.0; and/or
- the authentication credential is one of a digital certificate, a key or a password; and/or
- management of the certificate management device on the digital certificate includes generating, issuing and withdrawing.

11. The system according to any one of claims 8 to 10, wherein:
- uniform management on all the relevant digital certificates includes generating, issuing and withdrawing; and/or
- the third-party application sends identity, authentication credential and access grant of the third-party application to the system after the Authorization Server sends the access grant to the third-party application; and/or
- the user must be authenticated by the Authorization Server through the user agent before the third-party application is authorized for accessing, so that the third-party application obtains the access grant to obtain access token by means of the access grant; and/or
- when the third-party application requests to access the users' protected resources in the Resource Server, if the third-party application does not have a valid access token, the Resource Server redirects the access request of the third-party application to the user agent; and/or
- after the Authorization Server issues access token to the third-party application through the system, the third-party application submits access token to the Resource Server to access the users' protected resources.

12. The system according to claim 11, wherein:
- the Authorization Server authenticating the user is done by the user agent via directly authenticating to the Authorization Server; and
- the access grant is sent to the third-party application by the Authorization Server through the user agent.

13. The system according to claim 11, wherein,
- the Authorization Server authenticating the user is done by the user agent via redirecting to the Authorization Server through the system for authentication; and
- at least one of the following steps is performed: the access grant is sent to the third-party application by the Authorization Server through the system and the user agent, or the access grant is sent to the third-party application by the Authorization Server through the user agent.

14. The system according to any one of claims 8 to 10, wherein the distinguishable manner includes one of the following manners: the third-party application separately packages the identity, the authentication credential and the access grant, or the third-party application separately marks the identity, the authentication credential and the access grant.

15. A communication system, comprising:
- at least one Authorization Server;
- at least one Resource Server;
- a user agent;
- a third-party application; and
- a system for performing a centralized secure management on a third-party application to access users' protected resources stored in a Resource Server according to any one of claims 7-14.
